# EUROPÄISCHE PATENTSCHRIFT

(11) **EP 0 422 417 B1**
(45) Veröffentlichungstag und Bekanntmachung des Hinweises auf die Patenterteilung: **06.12.1995**
(21) Anmeldenummer: 90117971.3
(22) Anmeldetag: 17.09.1990
(51) Int. Cl.: H04L 27/20

(54) **Anordnung zum Erzeugen eines QPSK-Signals**
Apparatus for producing a QPSK signal
Dispositif pour créer un signal à quatre états de phase

(30) Priorität: 13.10.1989 DE 3934187
(43) Veröffentlichungstag der Anmeldung: 17.04.1991
(73) Patentinhaber: ANT Nachrichtentechnik GmbH, D-71522 Backnang (DE)
(72) Erfinder: Alberty, Michael, Dipl.-Ing., D-7150 Backnang (DE)

(56) Entgegenhaltungen:
- FR-A- 2 154 306
- US-A- 3 978 406
- ELECTRONICS. Bd. 39, 31. Oktober 1966, New York,(US); Seiten 91-94; Poppe Martin: "Double phase-shift keying speeds data over voice channels"

## Beschreibung

Die vorliegende Erfindung betrifft eine Anordnung zum Erzeugen eines quadratur-phasenumgetasteten Signals (QPSK), die für die Phasenumtastung eines Trägersignals (T) zwei in Reihe angeordnete Phasenschieber (PS1, PS2), von denen einer (PS1) in die Phasenzustände 0° und 180° schaltbar ist, aufweist, wobei einer (PS1) der beiden Phasenschieber (PS1, PS2) von einem von zwei Datensignalen (I, Q) ansteuerbar ist und der andere Phasenschieber (PS2) von einem aus einer logischen Verknüpfung der beiden Datensignale (I, Q) hervorgehenden Verknüpfungssignal (C) ansteuerbar ist.

Eine derartige Anordnung ist aus der US 3,978,406 bekannt. Die zwei Phasenschieber sind hierbei auf zwei fest vorgegebene Phasenzustände 0°, 90° bzw. 0°, 180° umschaltbar.

Aus der Veröffentlichung der NASA, Goddard Space Flight Center über tracking and data relay satellite system (TDRSS), User's Guide, Revision 5, September 1984, Appendix C, S. C-10, ist ein QPSK-Modulationsverfahren bekannt.

Nach diesem bekannten Verfahren wird ein Trägersignal auf zwei mit schaltbaren Phasenschiebern versehene Signalzweige aufgeteilt. Die beiden Trägersignalanteile werden, nachdem sie die von zwei Datensignalen (I, Q) gesteuerten schaltbaren Phasenschieber durchlaufen haben, wieder addiert. Zur Durchführung dieses Verfahrens sind neben den schaltbaren Phasenschiebern auch noch ein Leistungsteiler und eine Additionsschaltung erforderlich. Die in der genannten Veröffentlichung gezeigte Schaltungsanordnung besitzt außerdem in einem ihrer Signalzweige noch ein einstellbares Dämpfungsglied. Dieses Dämpfungsglied wird hier benötigt, um ein sogenanntes UQPSK-Signal (Unbalanced QPSK-Signal) zu erzeugen. Bei einem solchen Signal sind die Leistungen des Inphasen- und des Quadraturphasen-Signalanteils unterschiedlich groß.

Der Erfindung liegt die Aufgabe zugrunde, eine Anordnung der eingangs genannten Art anzugeben, die es ermöglicht, mit geringem Schaltungsaufwand QPSK-Signalzustände mit beliebig wählbarem Leistungsverhältnis zwischen deren Inphase- und Quadraturkomponente zu erzeugen.

Erfindungsgemäß wird diese Aufgabe durch die Merkmale des Anspruchs 1 gelöst. Eine vorteilhafte Ausbildung derAnordnung nach Anspruch 1 geht aus dem Unteranspruch hervor.

Anhand eines in der Zeichnung dargestellten Ausführungsbeipiels wird nachfolgend die Erfindung näher erläutert. Es zeigen:
Fig. 1 eine Schaltungsanordnung zum Erzeugen eines UQPSK-Signals,
Fig. 2 eine Phasenebene mit vier Signalzuständen und
Fig. 3 eine Wahrheitstabelle.

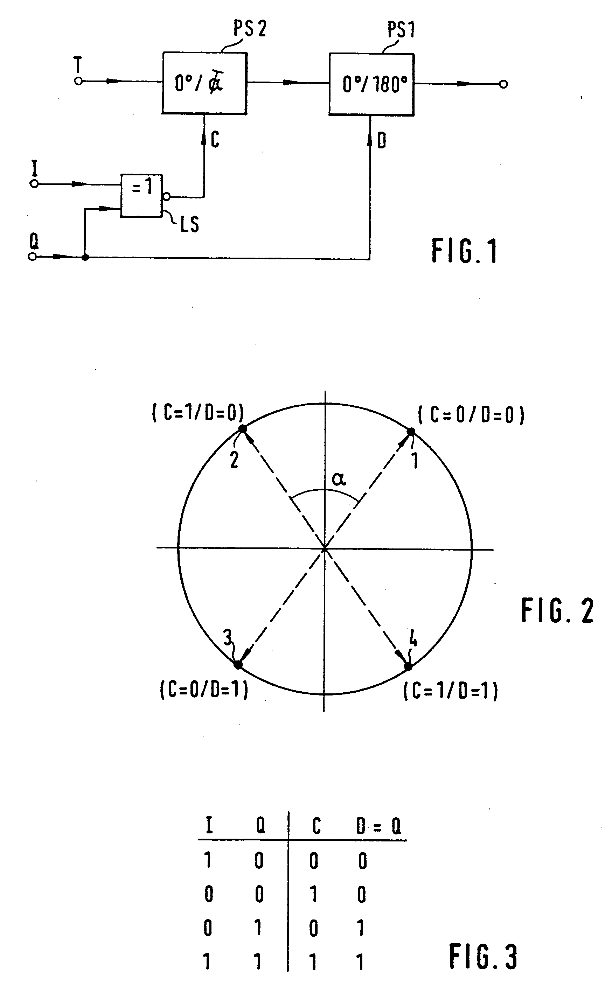

Bei der in Fig. 1 dargestellten Schaltungsanordnung wird ein Trägersignal T mit seiner gesamten Leistung über zwei in Reihe angeordnete schaltbare Phasenschieber PS1 und PS2 - nachfolgend als Phasenschalter bezeichnet - geführt. Der Phasenschalter PS1 kann zwischen den zwei Phasenzuständen 0° und 180° und der Phasenschalter PS2 zwischen den Phasenzuständen 0° und a umgetastet werden. Der hier allgemein mit a bezeichnete Phasenzustand kann auf einen Wert zwischen 0° und 180° festgelegt werden. Jedem dieser beiden Phasenschalter PS1 und PS2 wird ein Steuersignal C, D zugeführt. Diese beiden Steuersignale C und D werden aus zwei Datensignalen 1 und Q abgeleitet. Als Steuersignal D für den die Phasenzustände 0° und 180° aufweisenden Phasenschalter PS1 wird in dem gezeigten Ausführungsbeispiel das Datensignal Q verwendet. Das Steuersignal C für den anderen in die Phasenzustände 0° und a umtastbaren Phasenschalter PS2 entsteht aus der logischen Verknüpfung der beiden Datensignale 1 und Q in einer dafür vorgesehenen logischen Schaltung LS. Welche Art von logischer Schaltung LS zu verwenden ist, hängt davon ab, bei welchen Bit-Kombinationen der Datensignale I und Q das aus deren Verknüpfung entstehende Steuersignal C den Phasenschalter PS2 in den einen oder in den anderen Phasenzustand umzuschalten hat.

Wie die in Fig. 1 gezeigte Schaltungsanordnung funktioniert, sei anhand der in der Fig. 2 dargestellten Phasenebene erläutert. Der Signalzustand 1 in der Phasenebene soll hier beispielsweise einem Trägersignal T zugeordnet sein, das durch die beiden Phasenschalter PS1 und PS2 keine Phasenverzögerung erfährt. In diesem Fall sind beide Phasenschalter PS1 und PS2 in den Phasenzustand 0° geschaltet. Es wird z. B. davon ausgegangen, daß die beiden Phasenschalter PS1 und PS2 jeweils ihren Phasenzustand 0° annehmen, wenn das anliegende Steuersignal D bzw. C eine logische "0" hat. Die Schaltung liefert also den in der Phasenebene mit 1 gekennzeichneten Signalzustand, wenn beide Steuersignale C und D eine logische "0" haben. Erhält nun der Phasenschalter PS2 ein Steuersignal C mit einer logischen "1 so schaltet dieser in den Phasenzustand a um, und behält der Phasenschalter PS1 seinen Phasenzustand 0° bei (D=0), so erhält man den Signalzustand 2, d.h. das Trägersignal T wird um a phasenverschoben. In der Phasenebene stellt sich das so dar, daß der das ursprüngliche Trägersignal repräsentierende Vektor, welcher vom Ursprung der Phasenebene ausgeht und im Punkt 1 endet, um den Winkel a gedreht wird. Hat das Steuersignal C eine logische "0" und das Steuersignal D eine logische "1", so nimmt der Phasenschalter PS2 den Phasenzustand 0° und der Phasenschalter PS1 den Phasenzustand 180° an. Das über die beiden Phasenschalter PS1, PS2 geführte Trägersignal T erfährt somit eine Phasendrehung von 180°. Durch die 180° Phasendrehung geht der ursprüngliche Signalzustand 1 nun in den Signalzustand 3 über. Haben beide Steuersignale C und D eine logische "1", so schaltet der Phasenschalter PS2 in den Phasenzustand a und der Phasenschalter PS1 in den Phasenzustand 180° um. Das Trägersignal T erfährt somit insgesamt eine Phasendrehung um 180°+α. Daraus resultiert der Signalzustand 4. Von der Größe des Phasenzustandes a hängt das Leistungsverhältnis der Inphase- und der Quadraturphase-Komponente des modulierten Ausgangssignales ab. Ist der Phasenzustand a des Phasenschalters PS2 variabel, wie in der Fig. 1 angedeutet, so lassen sich alle gewünschten Leistungsverhältnisse zwischen der Inphase- und der Quadratur-Komponente einstellen.

Die Wahrheitstabelle in Fig. 3 zeigt eine mögliche Zuordnung zwischen den Datensignalen 1 und Q und den Steuersignalen C und D für die Phasenschalter PS1 und PS2. Dabei wird davon ausgegangen, daß als Steuersignal D für den Phasenschalter PS1 das Datensignal Q verwendet wird. Aus den einzelnen Bit-Kombinationen der Datensignale 1 und Q entstehen die in der Tabelle gemäß Fig. 3 aufgeführten Bitwerte für das Steuersignal C durch Verknüpfung der beiden Datensignale 1 und Q in einer Äquivalenzschaltung (EXNOR).

## Patentansprüche

1. Anordnung zum Erzeugen eines quadratur-phasenumgetasteten Signals (QPSK), die für die Phasenumtastung eines Trägersignals (T) zwei in Reihe angeordnete Phasenschieber (PS1, PS2), von denen einer (PS1) in die Phasenzustände 0° und 180 schaltbar ist, aufweist, wobei einer (PS1) der beiden Phasenschieber (PS1, PS2) von einem von zwei Datensignalen (I, Q) ansteuerbar ist und der andere Phasenschieber (PS2) von einem aus einer logischen Verknüpfung der beiden Datensignale (I, Q) hervorgehenden Verknüpfungssignal ansteuerbar ist, dadurch gekennzeichnet, daß der andere Phasenschieber (PS2) in den Phasenzustand 0° oder in einen Phasenzustand a, der im Bereich 0°<α<180° variiert werden kann, umschaltbar ist, so daß mit den zur Verfügung stehenden Werten der beiden Datensignale (I, Q) das die beiden Phasenschieber (PS1, PS2) durchlaufende Trägersignal (T) in variierbare Phasenlagen gebracht werden kann.

2. Anordnung nach Anspruch 1, dadurch gekennzeichnet, daß eine Äquivalenzschaltung (LS) die beiden Datensignale (I, Q) bitweise miteinander verknüpft, daß bei einer logischen "0" des Verknüpfungssignals der von ihm gesteuerte schaltbare Phasenschieber (PS2) den Phasenzustand 0 und bei einer logischen "1" der schaltbare Phasenschieber (PS2) den variierbaren Phasenzustand a annimmt und daß bei einer logischen "0" des den anderen schaltbaren Phasenschieber (PS1) steuernden Datensignals (Q) dieser den Phasenzustand "0" und bei einer logischen "1" den Phasenzustand 180° annimmt.

## Claims

1. Arrangement for producing a quadrature phase-shift keyed signal (QPSK) which, for phase-shift keying of a carrier signal (T), has two phase shifters (PS1, PS2) which are arranged in series and of which one (PS1) can be switched into the phase states 0° and 180°, it being possible to drive one (PS1) of the two phase shifters (PS1, PS2) from one of two data signals (I, Q), and it being possible to drive the other phase shifter (PS2) from a logically linked signal which is produced from logically linking the two data signals (I, Q), characterized in that the other phase shifter (PS2) can be switched over into the phase state 0° or into a phase state a which can be varied in the range 0°<a<180_{°}, so that the carrier signal (T) which passes through the two phase shifters (PS1, PS2) can be changed into variable phase angles by means of the available values of the two data signals (I, Q).

2. Arrangement according to Claim 1, characterized in that an exclusive-OR circuit (LS) logically links the two data signals (I, Q) to one another bit by bit, in that, in the case of the logically linked signal being a logic "0", the switchable phase shifter (PS2) which is controlled by it assumes the phase state 0° and, in the event of the switchable phase shifter (PS2) having a logic "1", assumes the variable phase state a, and in that, in the case of the data signal (Q) which controls the other switchable phase shifter (PS1) being a logic "0", said data signal (Q) assumes the phase state "0", and, in the case of a logic "1", assumes the phase state 180°.

## Revendications

1. Dispositif pour produire un signal à quatre états de phase (QPSK), qui présente pour changer la phase d'un signal porteur (T) deux déphaseurs (PS1 et PS2) disposés en série, dont l'un (PS1) peut être commuté dans les états de phase 0° et 180°, l'un (PS1) des deux déphaseurs (PS1, PS2) pouvant être commandé par l'un des deux signaux de données (I, Q) et l'autre déphaseur (PS2) par un signal de combinaison provenant d'une combinaison logique des deux signaux de données (l, Q), dispositif caractérisé en ce que l'autre déphaseur (PS2) peut être commuté dans l'état de phase 0° ou dans un état de phase a, qui peut varier dans la plage 0°<a<180_{°}, de telle sorte que l'on peut mettre avec les valeurs dont on dispose pour les deux signaux de données (l, Q) le signal porteur (T) passant à travers les deux déphaseurs (PS1, PS2) dans des positions de phase variables.

2. Dispositif selon la revendication 1, caractérisé en ce qu'un circuit équivalent (LS) combine les deux signaux de données (I, Q) l'un avec l'autre par bit, en ce que dans le cas d'un « 0 » logique du signal de combinaison le déphaseur (PS2) branchable commandé par lui prend l'état de phase variable a et que dans le cas d'un « 0 » logique du signal de données (Q) commandant l'autre déphaseur branchable (PS1), il prend l'état de phase « 0 » et dans le cas d'un « 1 » logique l'état de phase 180°.
